# EUROPÄISCHE PATENTSCHRIFT

(11) **EP 1 439 374 B1**
(45) Veröffentlichungstag und Bekanntmachung des Hinweises auf die Patenterteilung: **18.07.2007**
(21) Anmeldenummer: 03103709.6
(22) Anmeldetag: 07.10.2003
(51) Int. Cl.: G01C 21/36, G08G 1/0962

(54) **Navigationsvorrichtung mit einer Warneinheit zur rechtzeitigen Übertragung eines Hinweissignals**
Navigation device with warning unit to timely transmit a notice signal
Appareil de navigation avec unité d'avertissement pour transmettre à temps un signal de préavis

(30) Priorität: 15.01.2003 DE 10301190
(43) Veröffentlichungstag der Anmeldung: 21.07.2004
(73) Patentinhaber: ROBERT BOSCH GMBH, 70442 Stuttgart (DE)
(72) Erfinder: Kossira, Martin, 71672 Marbach am Neckar (DE); Stoerzel, Marc, 44319 Dortmund (DE)

(56) Entgegenhaltungen:
- EP-A- 1 162 560
- EP-A- 1 282 054
- WO-A-02/21351

## Beschreibung

### Stand der Technik

Die Erfindung geht aus von einer Informationsvorrichtung für einen Benutzer eines Fahrzeugs nach der Gattung des Hauptanspruchs. Es sind schon Informationsvorrichtungen für Kraftfahrzeuge bekannt, die der Führung eines Fahrzeugs in einem Straßennetz dienen. Hierzu wird eine aktuelle Position des Fahrzeugs bestimmt und eine Fahrtroute zu einem eingegebenen Fahrziel wird berechnet. Fahrhinweise zur Führung des Fahrzeugs entlang der Fahrtroute in dem Straßennetz werden ausgegeben. Die Informationsvorrichtungen können in das Fahrzeug integriert sein. Ferner ist es auch bekannt, Anschlüsse für Kleincomputer im Fahrzeug vorzusehen, die solche Zielführungsaufgaben übernehmen. Es sind ferner Terminerinnerer bekannt, zum Beispiel in Form tragbarer Kleincomputer, in die ein gewünschter Termin eingegeben werden kann. Der Termin wird im allgemeinen zusammen mit einer Eingabe bezüglich der Art und des Orts des Termins gespeichert. Kurz vor dem Termin erfolgt eine Warnung, zum Beispiel durch einen ausgegebenen Warnton, der den Benutzer des Terminerinnerers auf den in Kürze anstehenden Termin hinweist. Die Termindaten werden in einer Anzeige ausgegeben.

Aus der EP 1162560 A2 ist ein elektronischer Terminplaner bekannt, in welchem Termine mindestens nach Datum, Uhrzeiten und einer Individualbezeichnung einstellbar sind. In einem ersten Ausführungsbeispiel wird der Terminplaner dazu verwendet, bei einer Verbindung mit einem Navigationssystem einen entsprechenden Vorschlag einer Fahrtroute auszulösen, wenn damit zu rechnen ist, dass der Fahrer dieses Fahrziel auch tatsächlich anfahren will. Hierbei werden Verkehrsstauungen berücksichtigt, sodass bei einer Verbindung des Terminplaners mit dem Navigationsgerät gegebenenfalls eine Fahrt schon vor einem eigentlich, zuvor geplanten Fahrtbeginn vorgeschlagen wird. In einer weiteren Ausführungsform ist ein Terminplaner in ein Mobiltelefon integriert, das eine Navigationseinrichtung aufweist, aber insbesondere mit einem externen Diensteanbieter Daten austauscht. Der Diensteanbieter sammelt über andere Diensteanbieter oder über eigene Quellen Verkehrsinformationen. Der Diensteanbieter verwaltet Kundendaten, insbesondere geplante Fahrtrouten. Der Diensteanbieter teilt dem Mobiltelefon neben einer gegebenenfalls neuen Route auch eine geschätzte Fahrtzeit unmittelbar vor Fahrtantritt mit.

### Vorteile der Erfindung

Die erfindungsgemäße Intormationsvorrichtung für den Benutzer eines Fahrzeugs mit den Merkmalen des Hauptanspruchs hat demgegenüber den Vorteil, dass der Benutzer des Fahrzeugs so rechtzeitig auf einen von ihm wahrzunehmenden Termin hingewiesen wird, dass er den Ort des Termins mit dem Fahrzeug noch rechtzeitig erreichen und den Termin wahrnehmen kann. Er muss dabei seinen Abfahrtszeitpunkt nicht selber berechnen, sondern dieser Abfahrtszeitpunkt wird unter Berücksichtigung der Fahrtdauer von dem Startpunkt der Fahrt zu dem Fahrziel automatisch ermittelt und für die Bestimmung des Zeitpunkts der Ausgabe des Hinweises auf den Termin berücksichtigt. Damit entfällt für den Benutzer der Informationsvorrichtung der Aufwand, einen zusätzlichen Eintrag vor dem Termin selber vorzusehen, der ihm ein rechtzeitiges Erreichen des eigentlichen, gespeicherten Termins ermöglichen soll. Unabhängig von einem Aufenthaltsort des Benutzers kann somit ein rechtzeitiger Terminhinweis erfolgen. Der Benutzer wird somit sowohl von einem Abschätzen der Fahrtdauer als auch von einem Kontrollieren des Aufbruchszeitpunktes entlastet. Ein Fahren unter Stress wird durch die rechtzeitige Terminerinnerung ebenso vermieden, wie eine Ablenkung durch eine häufige Kontrolle der Zeit, um einen Abfahrtszeitpunkt nicht zu versäumen.

Durch die in den Unteransprüchen aufgeführten Maßnahmen sind vorteilhafte Weiterbildungen und Verbesserungen der im Hauptanspruch angegebenen Informationsvorrichtung möglich. Besonders vorteilhaft ist es, eine Funkschnittstelle zum Empfang von Verkehrsinformationen vorzusehen. Die empfangenen Verkehrsinformationen können bei der Berücksichtigung der Fahrtdauer mit einfließen, so dass die Fahrtdauer möglichst zutreffend in Abhängigkeit von der Verkehrslage berechnet werden kann. Insbesondere können hierbei Verkehrsstauungen, Witterungsverhältnisse oder bereits bekannte Verspätungen z.B. von öffentlichen Verkehrsmitteln oder Flugzeugen mit einkalkuliert werden. Gegenüber einer statischen, von einem Benutzer vorgegebenen Abfahrtszeit, kann somit eine flexible Anpassung an die aktuelle Verkehrslage erfolgen.

Ferner ist es vorteilhaft, eine Verbindung zu einem Datennetz und/oder einem Mobilfunknetz vorzusehen, so dass ein Hinweis auf die zu beginnende Fahrt über das Datennetz und/oder das Mobilfunknetz an eine vorgebbare Adresse übermittelt werden kann, zum Beispiel ein Mobiltelefon, ein tragbarer Kleincomputer, ein mobiles Empfangsteil (sogenannter Pager), einen Festnetztelefonanschluss oder eine Internetadresse, zum Beispiel eine E-Mail-Adresse. Unabhängig von dem Ort der Informationsvorrichtung ist somit der Benutzer über weitere Kommunikationsmittel erreichbar und kann sich somit von der Informationsvorrichtung auf die von ihm vorzunehmende Abfahrt zum Einhalten des Termins hinweisen lassen, auch wenn sich die Informationsvorrichtung selbst nicht in seiner unmittelbaren Nähe befindet.

Es ist weiterhin vorteilhaft, eine Verbindung zu einem Datennetz und/oder Mobilfunknetz vorzusehen, über die ein Termin verknüpft mit einer Ortsangabe an die Informationsvorrichtung übermittelt werden kann. Damit kann auf eine manuelle Eingabe des Termins an der Informationsvorrichtung verzichtet werden. Zudem können Termindaten unmittelbar aus einem Terminverwaltungsprogramm einer Recheneinheit an die Informationsvorrichtung übertragen werden.

Ferner ist vorteilhaft, eine Vorlaufzeit zwischen der Ausgabe eines ersten Hinweissignals auf den Fahrtstart und dem in Abhängigkeit von der Fahrtdauer tatsächlich vorzunehmenden Fahrtstart in Abhängigkeit von der Fahrtdauer und/oder dem Startpunkt der Fahrt automatisch zu bestimmen. Hierbei wird vorteilhaft eine größere Vorlaufzeit mit zunehmender Fahrtdauer gewählt, da mit der zunehmenden Fahrtdauer auch die absolute Unsicherheit für die berechnete Fahrtdauer steigt. Zudem sind gegebenenfalls bei längeren Fahrten auch noch Vorbereitungen vor der Fahrt durch den Benutzer zu treffen. Beginnt die Fahrt an einem Bahnhof oder Flughafen oder führt die Fahrtroute hierüber, so ist vorteilhaft ein zusätzliches Zeitpolster für einen Wechsel des Verkehrsmittels zur Sicherheit einzukalkulieren. Entsprechend der Fahrtroute kann gegebenenfalls auch bei besonders staugefährdeten Strecken die Vorlaufzeit für die Ausgabe des Hinweissignals vergrößert werden.

Ferner ist vorteilhaft, die Informationsvorrichtung lösbar mit einer Halterung in dem Fahrzeug zu verbinden, so dass die Informationsvorrichtung auch außerhalb des Fahrzeugs verwendet werden kann.

Um einen möglichst geringen Bauraum zu erreichen, kann die Informationsvorrichtung auch in eine Navigationsvorrichtung in einem Kraftfahrzeug integriert sein.

### Zeichnung

Ausführungsbeispiele der Erfindung sind in der Zeichnung dargestellt und in der nachfolgenden Beschreibung näher erläutert.

Es zeigen
- Figur I: ein Ausführungsbeispiel für eine erfindungsgemäße Informationsvorrichtung im Verbund mit anderen Geräten,

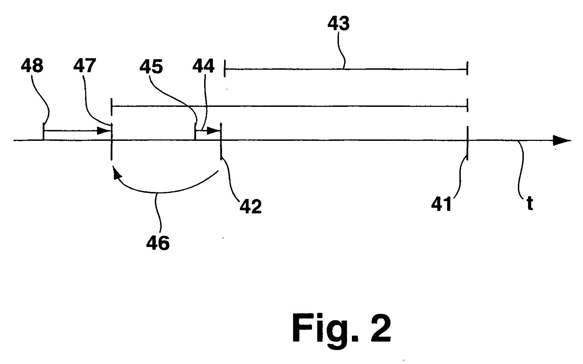

- Figur 2: ein Zeitdiagramm für die Ausgabe von Hinweissignalen mit der erfindungsgemäßen Informationsvorrichtung.

### Beschreibung des Ausführungsbeispiels

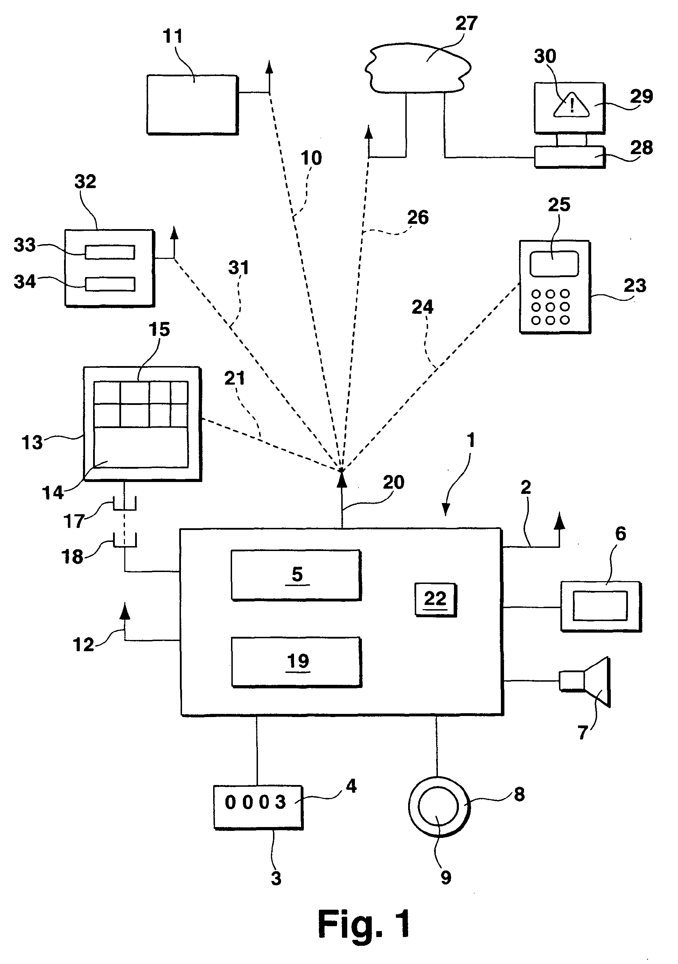

In der Figur 1 ist eine Navigationsvorrichtung 1 dargestellt, die in ein Kraftfahrzeug eingebaut ist. Die Navigationsvorrichtung 1 weist eine Ortungseinheit 2 auf, die insbesondere als eine Satellitenortungseinheit zur Positionsbestimmung über ein Satellitenortungssystem, zum Beispiel über das GPS (Global Positioning System) ausgeführt ist. Über eine Bedieneinheit 3 mit Tasten 4 wird ein Fahrziel in die Navigationsvorrichtung 1 eingegeben. Eine Recheneinheit 5 der Navigationsvorrichtung 1 berechnet, ausgehend von dem über die Ortungseinheit 2 ermittelten Startpunkt, eine Fahrtroute zu dem eingegebenen Fahrziel. Der Fahrtroute entsprechende Fahrhinweise werden über eine Anzeige 6 zum Beispiel in Form von Kartendarstellungen oder der Anzeige von Abbiegepfeilen und/oder mittels einer akustischen Ausgabe von Fahranweisungen über einen Lautsprecher 7 ausgegeben. Bei der Berechnung der Fahrtroute wird von der Recheneinheit 5 auch die Fahrtdauer berechnet. Hierzu sind der Recheneinheit 5 vorzugsweise in Abhängigkeit von der jeweils zu benutzenden Straßenklasse Geschwindigkeitswerte vorgegeben, so dass z.B. aus der Streckenlänge und der jeweiligen Straßenklasse die Fahrtdauer bestimmt werden kann. Für die Berechnung der Fahrtroute und der Fahrtdauer greift die Recheneinheit 5 auf ein Datenträgerlaufwerk 8 mit einem Datenträger 9 zu, auf dem Straßenkartendaten gespeichert sind. Hierbei ist den gespeicherten Straßenabschnitte jeweils eine Straßenklasse zugeordnet. Es können auch Durchfahrtdauern bzw. Durchschnittgeschwindigkeiten für einzelne Straßenabschnitte gespeichert sein.

Zudem kann die Navigationsvorrichtung 1 über eine erste Mobilfunkverbindung 10 mit einer ersten Dienstezentrale 11 verbunden werden, wobei über die erste Mobilfunkverbindung 10 Verkehrsdaten an die Navigationsvorrichtung 1 übertragen werden. Diese Verkehrsdaten können sich auf Verkehrsstockungen, gesperrte Straßen oder wetterbedingte Straßenverhältnisse, zum Beispiel Schnee oder Nebel, beziehen. Statt einer Mobilfunkverbindung 10, die im allgemeinen bidirektional ausgeführt ist, können in einem anderen Ausführungsbeispiel Verkehrsinformationen auch über eine Radioantenne 12 von der Navigationsvorrichtung 1 empfangen werden. Die Verkehrsmeldungen werden insbesondere über einen gesonderten Verkehrsmeldungskanal, zum Beispiel TMC (Traffic Message Channel) übertragen. Entsprechend der übertragenen Verkehrsmeldungen kann damit die erwartete Durchfahrtszeit für die einzelnen Straßenabschnitte der Fahrtroute erhöht bzw. erniedrigt werden. Aus der Summe der Fahrtdauern für die einzelnen Streckenabschnitte wird damit die Fahrtdauer für die gesamte Fahrtroute bestimmt. Die Navigationsvorrichtung 1 verfügt ferner in einer bevorzugten Ausführungsform über eine Funkschnittstelle 20, die vorzugsweise als eine Mobitfunkschnittstelle ausgebildet ist. Hierdurch können Datenverbindungen zu Mobilfunknetzen und/oder Datennetzen außerhalb des Fahrzeugs hergestellt werden.

An die Navigationsvorrichtung 1 kann ein Kleincomputer 13 angeschlossen werden, bei dem über eine vorzugsweise berührungsempfindliche Anzeigefläche 14 Termine zum Beispiel über ein Kalenderraster 15 eingebbar sind. Insbesondere ist das Datum und die Uhrzeit des Termins, eine Bezeichnung bzw. ein Thema des Termins und ein Ort des Termins eingebbar. Die Termine werden in dem Kleincomputer 13 gespeichert und sind über die Anzeigefläche 14 abrufbar. Der Kleincomputer 13 verfügt über einen Schnittstellenanschluss 17, der mit einem entsprechenden Gegenstück 18 der Navigationsvorrichtung verbunden wird. Das Gegenstück 18 ist insbesondere in einer Halterung zur Aufnahme des Kleincomputers 13 im Fahrzeug angeordnet. Die gespeicherten Termindaten können damit entweder nach Steuerung des Kleincomputers 13 über die berührungsempfindliche Anzeigefläche 14 oder über die Tasten 4 der Bedieneinheit 3 an die Navigationsvorrichtung 1 übertragen und in einer Speichereinheit 19 zur Terminspeicherung in der Navigationsvorrichtung 1 abgelegt werden. Ferner ist es auch möglich, über eine zweite Funkverbindung 21 die Termindaten über die Funkschnittstelle 20 der Navigationsvorrichtung 1 an die Speichereinheit 19 zu übertragen.

In der Speichereinheit 19 sind die Termine in einem bevorzugten Ausführungsbeispiel personenbezogen gespeichert, so dass ein Abruf von Termininformationen nur nach einer vorherigen Identifikation möglich ist. Ebenso ist es möglich, durch eine entsprechende Kennzeichnung durch den Benutzer berufliche und private Termine zu trennen. Entsprechend der Personenzuordnung oder der beruflichen und privaten Trennung können unterschiedliche Adressen angegeben sein, an die eine Warnung versendet werden soll. Zum Beispiel können sich von einer Navigationsvorrichtung damit verschiedene Personen den entsprechenden Hinweis jeweils an ihr Mobilfunktelefon senden lassen. Ebenso kann vorgegeben werden, einen Terminhinweis an eine private oder eine dienstliche E-Mail-Adresse zu versenden.

Die Navigationsvorrichtung 1 verfügt ferner über eine Uhrenschaltung 22, vorzugsweise ein Funkuhrmodul zur Ermittlung einer über Funk verbreiteten Uhrzeit, über die eine aktuelle Uhrzeit zur Verfügung steht. Die Recheneinheit 5 bestimmt eine Fahrtroute von der aktuellen Position des Fahrzeugs, die über die Ortungseinheit 2 bestimmt wird, zu dem Ort, an dem der Termin stattfinden soll. Aus der Fahrtroute wird nun unter Berücksichtigung der zu benutzenden Straßenklassen bzw. Verkehrsmittel und gegebenenfalls der Verkehrslage eine erwartete Fahrtdauer ermittelt. Anhand der so bestimmten Fahrtdauer wird eine Zeit festgelegt, zu der der Fahrer die Fahrt beginnen soll. Ferner wird eine Zeit bestimmt an der ein erstes Hinweissignal auf den Termin und den vorzunehmenden Start der Fahrt an einen Benutzer ausgegeben werden soll.

Die Berechnung der Fahrtroute erfolgt dabei vorzugsweise erst am Tag des gespeicherten Termins selbst. Aus der sich dabei ergebenden Fahrtdauer wird eine Vorlaufzeit vor dem erwarteten Fahrtbeginn bestimmt, zu der ein Hinweissignal an den Benutzer ausgegeben werden soll. Nähert sich die Uhrzeit dem Zeitpunkt, an dem erstmalig auf die Abfahrt hingewiesen werden soll, so wird die Fahrtdauer unter Berücksichtigung der von der ersten Dienstezentrale 11 übertragenen Verkehrsdaten regelmäßig überprüft. Dies erfolgt z.B. bis zu einer Dauer der doppelten, erwarteten Fahrtdauer im Stundenrhythmus, anschließend bis zu der bestimmten Startzeit im Halbstunden- oder Viertelstundenrhythmus. Wird der Zeitpunkt eines ersten Hinweises erreicht, so gibt die Navigationsvorrichtung ein Warnsignal aus. Das Warnsignal kann zunächst über die Anzeige 6 bzw. den Lautsprecher 7 der Navigationsvorrichtung selbst optisch und/oder akustisch ausgegeben werden. Ferner kann über die Funkschnittstelle 20 der Navigationsvorrichtung 1 ein Signal an ein Mobilfunktelefon 23 des Benutzers über eine Mobilfunkverbindung 24 übertragen werden. Es kann dabei von dem Mobilfunktelefon 23 ein Klingelsignal ausgegeben oder in einer Anzeige 25 eine Kurznachricht mit einem Hinweis auf den Termin und die vorzunehmende Fahrt ausgegeben werden. An Stelle einer Datenübertragung an ein Mobilfunktelefon kann auch eine Übertragung an ein Festnetztelefon erfolgen. Ferner ist es möglich, bei einem Abheben des Hörers bzw. bei einem Herstellen einer Telefonverbindung ein Sprachsignal an das Mobilfunktelefon bzw. das Festnetztelefon zu übermitteln, wobei ein gesprochener Hinweis auf die vorzunehmende Fahrt und/oder den Termin übertragen wird. In einem weiteren Ausführungsbeispiel kann über eine weitere Mobilfunkverbindung 26 eine Verbindung zu einem Datennetz 27 hergestellt werden, zum Beispiel eine Verbindung zum Internet. Über das Datennetz 27 kann eine Nachricht an eine Recheneinheit 28 übermittelt werden, die in einer Anzeige 29 eine Warnung 30 vorzugsweise mit einem Hinweis auf die vorzunehmende Fahrt und/oder den Termin ausgibt.

In weiteren Ausführungsformen können Termine auch von der Recheneinheit 28 über das Datennetz 27 an die Navigationsvorrichtung 1 übermittelt werden. Ebenso kann, zum Beispiel in Form einer Kurznachricht, ein Termin von dem Mobilfunktelefon 23 über die Mobilfunkverbindung 24 an die Navigationsvorrichtung 1 übermittelt werden. Anstelle einer Fahrtroutenberechnung und Fahrtdauerbestimmung in der Navigationsvorrichtung 1 kann auch über eine weitere Mobilfunkverbindung 31 eine Verbindung zu einer Dienstezentrale 32 hergestellt werden, die über eine Recheneinheit 33 eine aktuelle Fahrtroute und eine hierfür erforderliche Fahrtdauer unter Zugriff auf eine Datenbasis 34 bestimmt. Die Fahrtroute und die Fahrtdauer werden dann über die weitere Mobilfunkverbindung 31 an die Navigationsvorrichtung 1 übermittelt.

Um die Leistungsaufnahme der Navigationsvorrichtung 1 zu verringern, ist in einem Standby-Betrieb insbesondere nur die Uhrenschaltung 22 aktiv, die bei Erreichen einer in der Speichereinheit 19 abgelegten Vorlaufzeit eine Systemaktivierung der Navigationsvorrichtung 1 derart durchführt, dass die entsprechenden Hinweissignale ausgegeben bzw. über die Mobilfunkverbindungen an entsprechende Einheiten wie den Kleincomputer 13, das Mobilfunktelefon 23 oder die Recheneinheit 28 übermittelt werden können.

In der Figur 2 ist ein zeitlicher Ablauf eines Hinweises auf einen Termin entlang eines Zeitstrahls t dargestellt. Ein Benutzer hat einen Termin zu dem Zeitpunkt 41, beispielsweise eine Besprechung um 15.00 Uhr, die auf der Messe in Stuttgart stattfinden soll, in den Kalender elektronisch eingetragen. Am Vortag des Termins ist der Benutzer nach Ulm gefahren, so dass am Morgen des Termins die Navigationsvorrichtung 1 feststellt, dass der Benutzer sich in Ulm befindet. Daraufhin wird eine Fahrtdauer 43 von Ulm zur Messe nach Stuttgart von zwei Stunden bestimmt, so dass die Fahrt spätestens zu einem Zeitpunkt 42, also um 13.00 Uhr, begonnen werden muss. Entsprechend der Fahrtdauer wird eine Vorlaufzeit 44 von 20 Minuten ermittelt, so dass ein erster Hinweis auf die Fahrt zu dem Zeitpunkt 45 um 12.40 Uhr, also 20 Minuten vor dem geplanten Abfahrtszeitpunkt, zu ausgegeben werden soll. Um 9.00 Uhr wird jedoch von der ersten Dienstezentrale 11 an die Navigationsvorrichtung 1 die Information übertragen, dass starker Schneefall den Verkehr auf der Autobahn von Ulm nach Stuttgart behindert und es auch bereits zu Verkehrsstockungen gekommen ist. Die Fahrtdauer wird aus diesem Grund von 2 Stunden auf 3 ¼ Stunden, entsprechend einer Verschiebung 46 auf einen neuen Startpunkt 47, also auf 11 Uhr 45, verschoben. Da die Situation unübersichtlich ist und sich die Verkehrslage noch verschlechtern kann, wird auch die Vorlaufzeit vergrößert, so dass bereits eine Stunde vor dem neuen, geplanten Startpunkt zu einem zweiten Vorlaufzeitpunkt 48, also um 10 Uhr 45, ein Hinweis an den Benutzer ausgegeben wird, so dass er sich rechtzeitig auf den früheren Abfahrtszeitpunkt vorbereiten kann.

## Patentansprüche

1. Navigationsvorrichtung für einen Benutzer eines Kraftfahrzeugs mit einer Vorrichtung (5) zur Ermittlung der Fahrtdauer von einem Startpunkt zu einem Fahrziel, mit einer Speichereinheit (19) zur Speicherung eines Termins und mit einer Warneinheit (6, 7), **dadurch gekennzeichnet; dass** die die Navigationsvorrichtung (1) in das Kraftfahrzeug eingebaut ist und dass die Vorrichtung (5) zur Ermittlung der Fahrtdauer, die Speichereinheit (19) und die Warneinheit (6, 7) so verbunden sind, dass von der Warneinheit (6, 7) ein Hinweissignal auf einen vorzunehmenden Fahrtbeginn unter Berücksichtigung der Fahrtdauer so rechtzeitig Über eine Verbindung (20) zu einem Datennetz und/oder Mobilfunknetz (21, 24, 26) außerhalb des Fahrzeugs an eine vorgebbare Adresse (23, 28) übertragen wird, dass das Fahrziel zu dem gespeicherten Termin erreicht werden kann.

2. Navigationsvorrichtung nach Anspruch 1, **gekennzeichnet durch** eine Funkschnittstelle (20) zum Empfangen von Verkehrsinformationen zur Berücksichtigung bei der Berechnung der Fahrtdauer.

3. Navigationsvorrichtung nach einem der vorherigen Ansprüche, **gekennzeichnet durch** eine Verbindung (21, 31) zu einem Datennetz und/oder Mobilfunknetz zum Empfang eines mit einer Ortsangabe verknüpften Termins.

4. Navigationsvorrichtung einem der nach Ansprüche 1-2, **dadurch gekennzeichnet, dass** ein Sprachsignal mit einem gesprochenen Hinweis auf die vorzunehmende Fahrt und/oder den Termin an ein Mobilfunktelefon oder an ein Festnetztelefon übermittelt wird.

5. Navigationsvorrichtung nach einem der vorherigen Ansprüche, **gekennzeichnet durch** eine Recheneinheit (5) zur Berechnung einer Vorlaufzeit für eine Ausgabe des Hinweissignals vor dem vorzunehmenden Start der Fahrt in Abhängigkeit von der Fahrtdauer und/oder dem Startpunkt der Fahrt und/oder der Fahrtroute.

## Claims

1. Navigation apparatus for a user of a motor vehicle having an apparatus (5) for ascertaining the journey time from a starting point to a destination, having a memory unit (19) for storing an appointment and having a warning unit (6, 7), **characterized in that** the navigation apparatus (1) is built into the motor vehicle and **in that** the apparatus (5) for ascertaining the journey time, the memory unit (19) and the warning unit (6, 7) are connected such that the warning unit (6, 7) transmits an advice signal for a journey which is to be started, taking account of the journey time, to a prescribable address (23, 28) via a connection (20) to a data network and/or mobile radio network (21, 24, 26) outside the vehicle early enough for the destination to be able to be reached for the stored appointment.

2. Navigation apparatus according to Claim 1, **characterized by** a radio interface (20) for receiving traffic information to be taken into account when calculating the journey time.

3. Navigation apparatus according to one of the preceding claims, **characterized by** a connection (21, 31) to a data network and/or mobile radio network for receiving an appointment linked to a location statement.

4. Navigation apparatus according to one of Claims 1-2, **characterized in that** a voice signal containing spoken advice of the journey which is to be made and/or the appointment is transmitted to a mobile radio telephone or to a landline telephone.

5. Navigation apparatus according to one of the preceding claims, **characterized by** a processor (5) for calculating a lead time for outputting the advice signal before the journey is to be started on the basis of the journey time and/or the starting point for the journey and/or the journey route.

## Revendications

1. Dispositif de navigation pour un utilisateur d'un véhicule automobile comportant un dispositif (5) permettant de déterminer le temps de parcours d'un point de départ à une destination, une unité de mémorisation (19) permettant de mettre en mémoire une date et comportant une unité d'avertissement (6, 7),
**caractérisé en ce que**
le dispositif de navigation (1) est installé dans le véhicule automobile et le dispositif (5) permettant de déterminer le temps de parcours, l'unité de mémorisation (19) et l'unité d'avertissement (6, 7) sont reliés pour que l'unité d'avertissement (6, 7) transmette un signal d'indication sur un début de parcours à entreprendre compte tenu du temps de parcours par une liaison (20) à un réseau de données et/ou à un réseau de radiotéléphonie mobile (21, 24, 26) en dehors du véhicule, suffisamment à temps à une adresse prescrite (23, 28) pour que la destination puisse être atteinte à la date mémorisée.

2. Dispositif de navigation selon la revendication 1,
**caractérisé par**
une interface radio (20) permettant de recevoir les informations sur le trafic destinées à être prises en considération lors du calcul du temps de parcours.

3. Dispositif de navigation selon l'une des revendications précédentes,
**caractérisé par**
une liaison (21, 31) à un réseau de données et/ou à un réseau de radiotéléphonie mobile permettant de recevoir une date associée à une indication de position.

4. Dispositif de navigation selon l'une des revendications 1 à 2,
**caractérisé en ce qu'**
un signal vocal comportant une indication parlée sur le parcours à entreprendre et/ou la date est transmis à un téléphone sans fil ou à un téléphone de réseau fixe.

5. Dispositif de navigation selon l'une des revendications précédentes,
**caractérisé par**
une unité de calcul (5) permettant de calculer un temps de préparation et de mise en route pour un affichage à l'écran du signal d'indication avant le début du parcours à entreprendre, en fonction du temps de parcours et/ou du point de départ du parcours et/ou de l'itinéraire de voyage.
